# EUROPEAN PATENT APPLICATION

(11) **EP 4 778 376 A1**
(43) Date of publication of application: **22.07.2026**
(21) Application number: 26151866.6
(22) Date of filing: 14.01.2026
(51) Int. Cl.: A01C 1/08

(54) **SYSTEM AND METHOD FOR THE ELIMINATION OF NEMATODES FROM CEREAL AND VEGETABLE SEEDS**

(30) Priority: 17.01.2025 IT 202500000780
(71) Applicant: Società Agricola Giulio Melzi D'Eril S.S., 27011 Belgioso (PV) (IT)
(72) Inventor: Melzi D'Eril, Giulio, 27011 Belgioioso (PV) (IT)
(74) Representative: Rigamonti, Dorotea

(57) **Abstract**

A plant (1) and a method for the continuous disinfestation of cereal and vegetable seeds from nematodes and/or cryptobiosis nematodes comprising:
- a first chamber (104), which is a closed washing chamber comprising heat-insulating walls (109), a treatment tank (113), a basket with auger (112) without central shaft, a tank (107) for collecting spent hot water;
- a second chamber (105), which is a drainage chamber comprising heat-insulating walls (109), a collection tank (107) and a filtered cold air aeration system (111);
- a third chamber (106) with heat-insulating walls (109), which is a drying chamber comprising a basket with auger (112) without central shaft.

## Description

### TECHNICAL FIELD

The present invention refers to a plant and a method implemented in said plant for the continuous disinfestation of nematodes from cereal and horticultural seeds, in particular from rice.

### BACKGROUND

Nematodes are a class of worms or pinworms of the phylum *Nematoda.*

Nematodes are known to infect both plants and animals. When they reside in the soil, they cause significant damage to the structure of the plants. As a result, the weakened plant becomes vulnerable to attacks by other pathogens. Without proper treatment, the plant dies. Nematodes cause millions of dollars of damage each year to lawns, ornamental plants, and food crops.

If left unchecked, nematodes reproduce abundantly, spreading into the surrounding soils and infesting ever-expanding areas. In addition, being almost all polyphagous species, they are able to infest different cultures.

*Aphelenchoides besseyi* Christie is the rice nematode that causes the disease called *white tip.* The latter is named after the typical symptom, the white apex of the leaf, and was much studied in Japan and the USA in the 1950s-60s. The main route of spread of *A.besseyi* is the seed, in which the pathogen can survive for three years in a state of anhydrobiosis. The disease causes production losses of between 10 and 90% on average, depending on varietal susceptibility and the degree of seed infestation.

Being a seed-borne nematode, seed treatment is the best method for controlling *A.besseyi*: heat treatment with hot water is the most effective, although not eradicating one, but it is difficult to apply on large amounts of seed. Various chemical treatments allow good control, but they are not able to eliminate all nematodes (Ou S.H. (1985) - White tip. In: "Rice diseases". Commonwealth Mycological Institute, Kew, England: 337-346.; Gergon E.B., Misra J.K. (1992) - White tip disease of rice. In: "Plant disease of international importance". Vol. I. Diseases of cereals and pulse. Edited by Singh S., Mukhopadhyay A.N., Kumar J. Chaube H.S.J., Englewood Cliffs, New Jersey, Usa; Prentice Hall, Inc.: 201-211).

JP2012179061 describes a technology for the disinfestation of rice seeds that involves the use of only water and temperature. The plant requires the seeds to be loaded into perforated bags, which lead, in addition to operational difficulties, to the formation of compact masses that negatively affect the heat exchange necessary for sanitisation, with loss of yield.

JPH10136714A describes a technology for the disinfestation of rice seeds that involves the use of only water and temperature, raising the temperature up to 90 °C. The method has the limitation that the high temperature required to carry out the process in times of the order of seconds damages the seed, compromising its germinability.

Increasingly stringent regulations govern the availability and use of chemicals, the demand for safer pesticides and alternative pest control strategies is increasing.

Therefore, the need to have plants and methods that make heat treatment with hot water feasible even on large volumes of seeds, energy-efficient and environmentally friendly, is strongly felt.

### DESCRIPTION

An object of the present invention is a plant and a method for the continuous disinfestation of seeds from nematodes and/or cryptobiosis nematodes.

### DESCRIPTION OF THE FIGURES

**Figure 1****:** diagram of an embodiment of the plant.
**Figure 2****:** an embodiment of a seed storage silo.
**Figure 3****:** portion of the plant according to the present invention, in the embodiment comprising a conveyor belt.
**Figure 4****:** portion of the plant according to the present invention, in the embodiment comprising an auger.
**Figure 5****:** an embodiment of a dryer.
**Figure 6****:** diagram of the hydraulic circuit and vapour and heat recovery from the dryer.

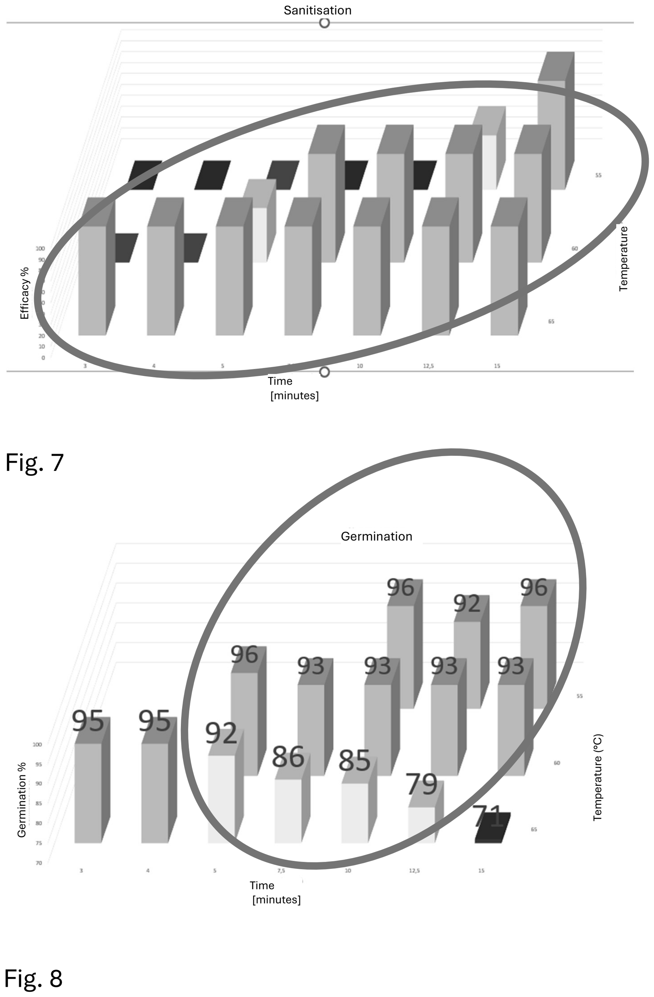

**Figure 7****:** disinfestation efficiency when T and t conditions vary.
**Figure 8****:** rice germination when T and t conditions vary.

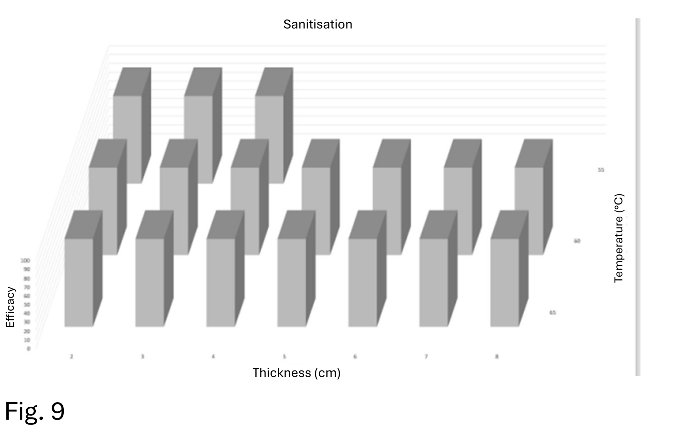

**Figure 9****:** disinfestation efficiency as the height of the layer of rice on the conveyor belt varies.
**Figure 10****:** diagram of a second embodiment of the plant.
**Figure 11****:** diagram of the seed handling section of the second embodiment of the plant.
**Figure 12****:** chamber and sanitizing basket of the second embodiment of the plant.
**Figure 13****:** draining chamber of the second embodiment of the plant.
**Figure 14****:** drying chamber of the second embodiment of the plant. The thick arrows indicate the flow of air in input from the motor and in output.
**Figure 15****:** details about the water circuit filter of the second embodiment of the plant. The thick arrows indicate the flow of water in input from the tanks and in output, to the boiler.
**Figure 16****:** graph showing the degree of disinfestation of rice when T and t conditions vary after treatment with the method according to the present invention.
**Figure 17****:** graph showing the degree of germination of rice after treatment with the method according to the present invention.

### DETAILED DESCRIPTION

An object of the present invention is a plant and a method for the disinfestation of cereal and vegetable seeds from nematodes and/or cryptobiosis nematodes.

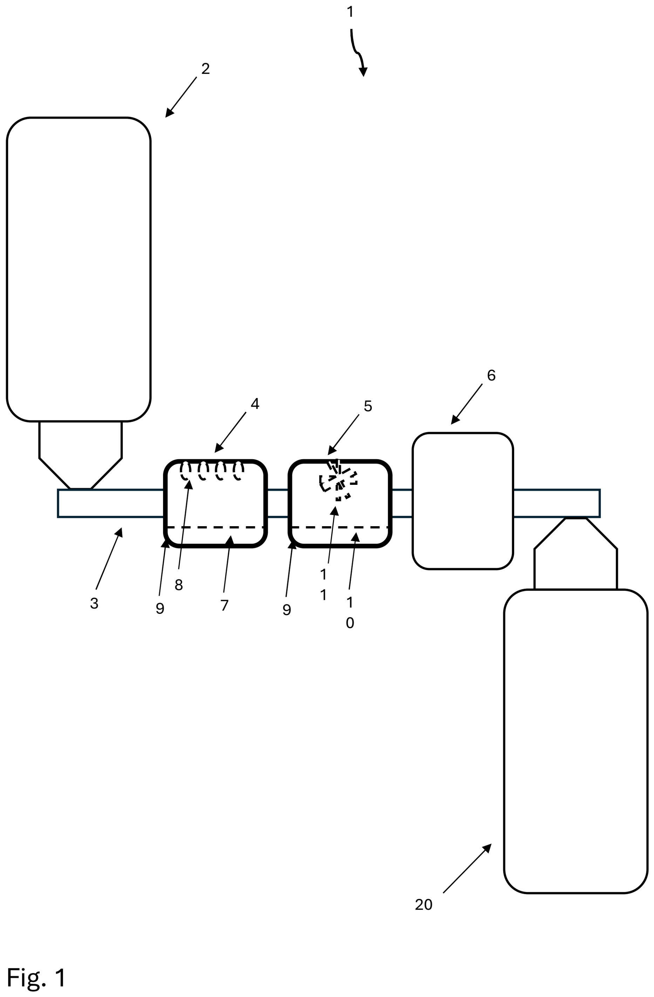

In one embodiment, said plant 1, schematized in **Figure 1****,** comprises:
- a first silo 2 and a second silo 20, connected to each other;
- a first chamber 4, which is a closed washing chamber comprising heat-insulating walls 9, nozzles 8 for the supply of hot water and a tank 7 for collecting water;

- a second chamber 5, which is a drainage chamber comprising heat-insulating walls 9, a collection tank 10 and an aeration system 11;
- a dryer 6.

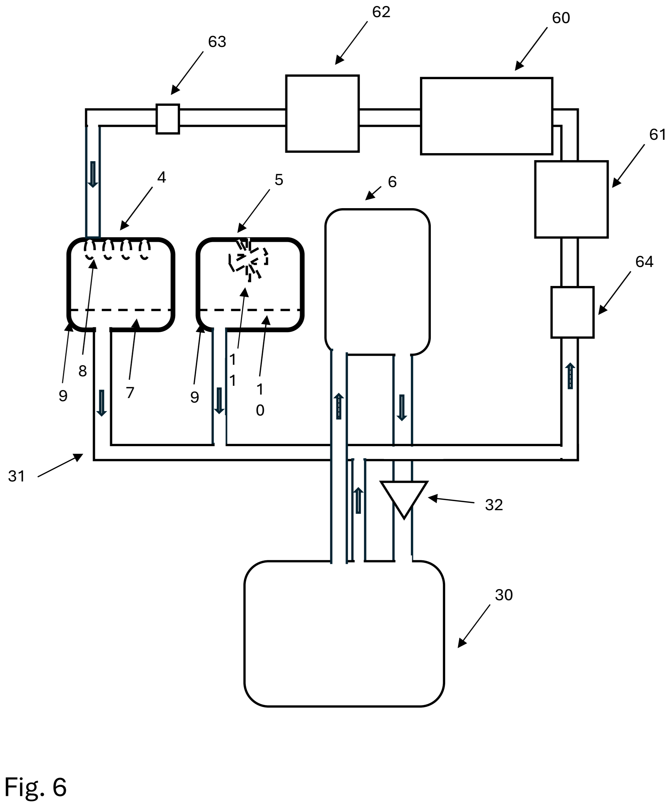

Said plant 1 also comprises, reference **Figure 6****,** a total recovery dryer motor 30, which receives water and heat from the dryer 6 to then re-introduce them into circulation.

Before entering said total drying motor, or dryer motor 30, the flow of warm and humid air exiting from said dryer 6 passes through a filtering system 32, which stops solid particles. From said dryer motor 30, a flow of hot and dry air is then re-introduced into said dryer 6.

A hydraulic circuit 31 collects water from the tank 7 of said first chamber, from the tank 10 of said second chamber, from said total recovery dryer motor 30 and conveys it, after having brought it back to the operating temperature with a boiler or other water heating system 60, to the nozzles 8 in said first chamber.

Preferably, upstream of said heating system 60 there is a tank 61 where water with a temperature to be restored accumulates.

Preferably, downstream of said heating system 60 there is a tank 62 where it accumulates at the correct temperature for re-introduction into the circulation, after passing through a solenoid valve 63 for pressure reduction.

Preferably, before being introduced into said tank 61 said water is filtered by a filter 64.

Advantageously, said dryer motor 30 recovers water and heat from the drying process, the heat is reused for drying and the water is redirected into the hydraulic system.

In one embodiment, said first and said second silos are connected by means of a conveyor belt 3 which is a perforated belt also comprising lateral sides.

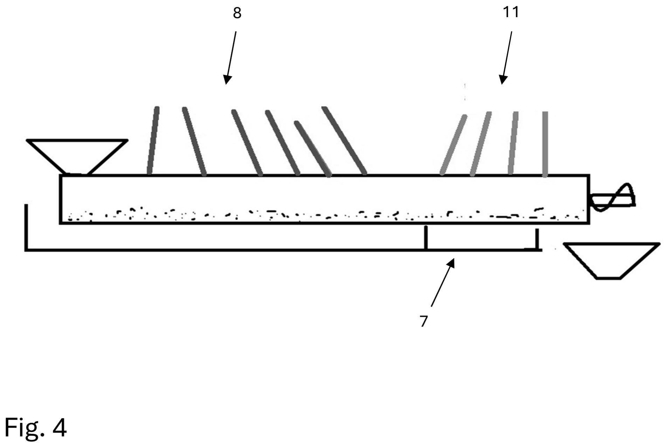

In one embodiment, said first and said second silos are connected by means of a closed auger in a pipe, wherein said auger consists of a rubber screw, wherein said rubber prevents damage to the seed. In this embodiment, depicted in **Figure 4****,** said pipe comprises in a first portion said nozzles 8 for washing the seed, in the end part it comprises holes for draining the water. A collection tank 7 is located below said pipe. In the draining portion, said pipe comprises nozzles 11 for the introduction of cold air.

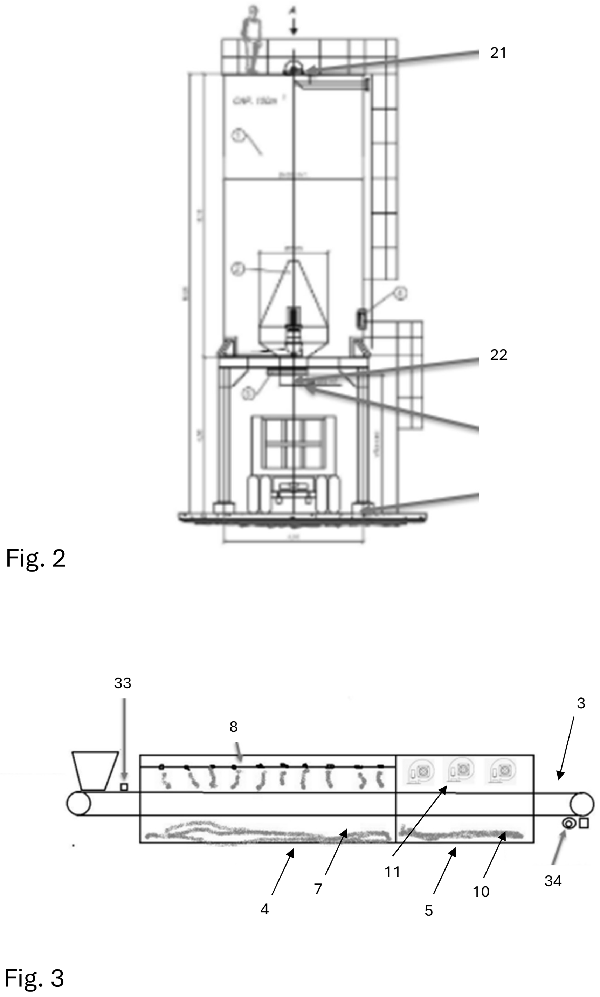

In one embodiment, said first and said second silos 2, 20 comprise a cup loading system 21, so as to preserve the integrity of the seed during loading **(****Figure 2****).** Said first and said second silos also comprise an outlet mouth at the bottom, through a damper 22 which is preferably electronically controlled.

In one embodiment, along said conveyor belt 3 there are, in the order and with reference to **Figure 3****:**
- a scraper 33, adapted to even out the height of the mass of seeds deposited therein;
- said first chamber 4 which is a thermally insulated closed chamber comprising nozzles 8 for the supply of hot water and a tank 7 for collecting the water;
- said second chamber 5, which is a drainage chamber comprising heat-insulating walls, a collection tank 10 and an aeration system 11, for example at least one centrifugal fan.

In one embodiment, on the end portion of said conveyor belt there is a brush 34, which favours the unloading of all the seeds from the conveyor belt 3.

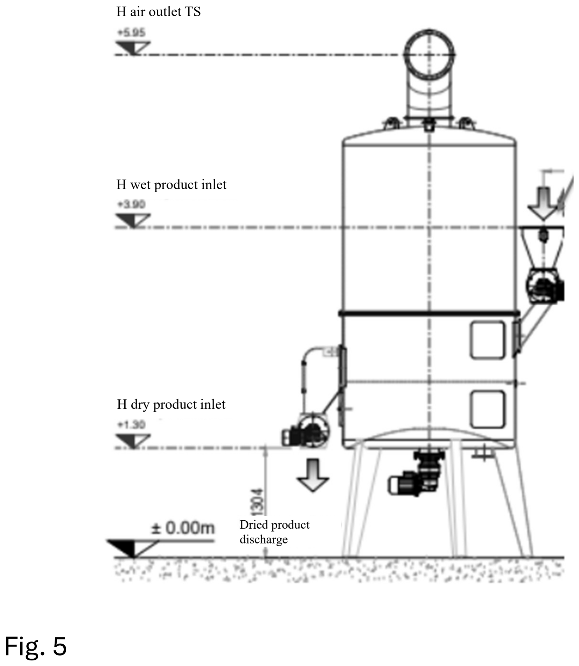

Said conveyor belt terminates on a hopper which feeds into a dryer, which is preferably a fluid bed or vibrating fluid bed dryer **(****Figure 5****).**

Said first and said second silos comprise sensors that control the timing and loading and unloading speed.

In one embodiment, said plant also comprises an automated system for regulating the water flow and, consequently, the water level. The washing chamber therefore comprises at least one flow meter before the nozzles, at least one flow meter in the water collector in the collection tank, at least one liquid presence sensor positioned 0.5 cm above the seed layer (determined by the scraper)

Said sensors, suitably connected to a programmable PLC, detect the data and send an open/close signal to a solenoid valve with the function of pressure reducer downstream of the hot water accumulation (hydraulic circuit). Varying the pressure adjusts the volume of water exiting from the nozzles, corrects the flow and therefore the water level on the seeds.

The water recovered from all phases is accumulated and heated to 55 - 65 °C by the boiler. In doing so, the boiler restores the heat absorbed by the seeds (from 2 to 10 °C). Water recovery allows great energy savings.

Said method is implemented in the plant described above and comprises:
1) optionally, storage of the selected seeds deprived of straw and other physical contaminants;
2) Wet treatment with hot water;
3) Drying of disinfested seeds;
4) Provision of disinfected and dried seeds.

In one embodiment, said seeds are rice.

The rice to be treated is loaded into said first silo. With reference to **Figure 1****,** said rice is loaded from above into said silos, and then exits therefrom through a hatch that opens at the bottom of the silos and from here it is conveyed in a loading hopper of the conveyor belt that spreads it on the surface of the belt itself.

On said conveyor belt, the scraper makes the height of the rice deposited there uniform before entering the first chamber which is a thermally insulated closed chamber. The rice is soaked by water at a temperature between 50 °C and 70 °C until it is immersed in water, where the water level is slightly higher than that of the rice, for example it is about 0.5 mm above the level of the rice.

Said rice is kept immersed in said water for a period of between 3 and 15 minutes, after which it is conveyed by the same conveyor belt to the second chamber which is the drainage chamber. In said drainage chamber, the rice is hit by a flow of air that allows the excess water, collected in the tank below, to be drained and the thermal inertia to be reduced.

Once said draining phase is finished, the belt unloads the rice into the loading hopper of the drying plant. Said unloading takes place by gravity and trowelling/brushing of the belt to remove all the rice from the belt.

Upon reaching the hopper, the rice enters the dryer which brings the seed to the required % humidity, between 13-14%. Said drying is operated at temperatures between 35 and 70 °C, preferably at 60 °C with an air speed between 5,000 and 25,000 m³/h, preferably at 22,000 m³/h.

The dried rice exits the discharge mouth of the dryer and, preferably via a cup system, is loaded into a storage silo. Said storage silos are preferably provided with an active aeration system, so as to remove excess water condensation.

Advantageously, the water circuit connecting said first and said second chamber, as well as said dryer, allows the water and the heat contained therein to be recovered.

The method according to the present invention allows an efficient recovery of water, water heat and latent heat of evaporation, reaching an energy cost reduction equal to 75% and a water saving of 95%.

In one embodiment, the timing and speed for unloading from said silos is controlled electronically. In one embodiment, said silo comprises load cells that modulate the unloading timing and speed based on the weight of the rice contained therein.

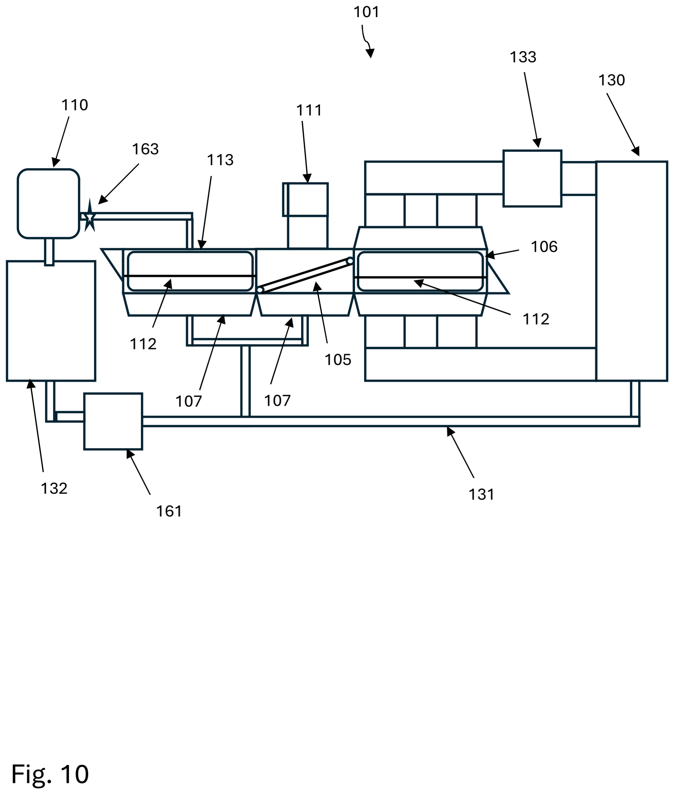

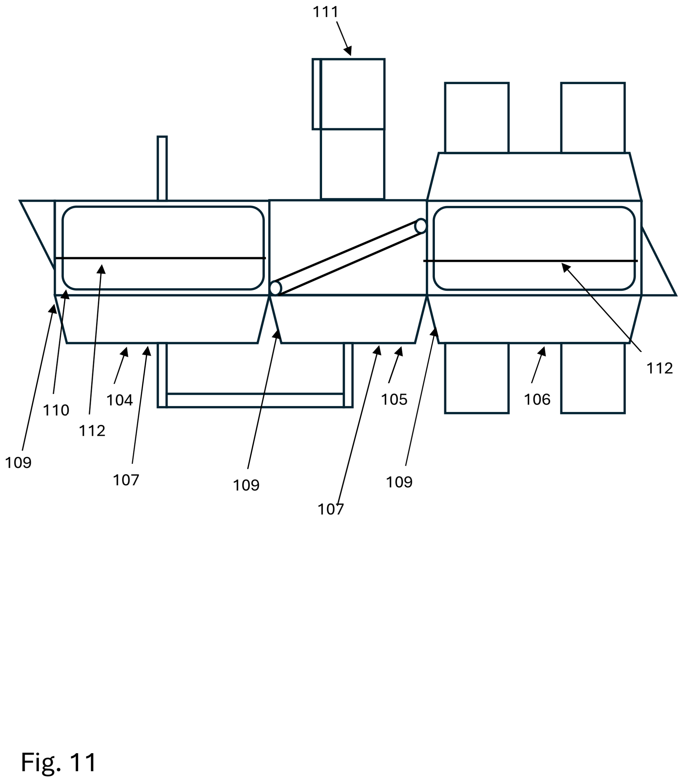

In a second embodiment, with reference to **Figure 10** and **Figure 11****,** said plant 101 comprises:
- a first chamber 104, which is a closed washing chamber comprising heat-insulating walls 109, a treatment tank 113, a basket with auger 112 without central shaft, a tank 107 for collecting spent hot water;
- a second chamber 105, which is a drainage chamber comprising heat-insulating walls 109, a collection tank 107 and a filtered cold air aeration system 111;
- a third chamber 106 with heat-insulating walls 109, which is a drying chamber comprising a basket with auger 112 without central shaft.

In one embodiment, said plant 101 also comprises a total recovery dryer motor 130, which recovers the latent heat of evaporation and the water vapour without emissions into the atmosphere. From said dryer motor 130, a flow of hot and dry air is re-introduced into said third chamber 106.

In one embodiment, said plant 101 also comprises a filtering system 133, located upstream of said dryer motor 130. The presence of said filtering system 133, through which the flow of warm and humid air exiting from said third chamber 106 passes, stops any solid particles without reducing the air flow. The presence of an anti-microbial filter prevents re-contaminations.

A hydraulic circuit 131 collects water from the collection tank 107 of said first chamber 104, from the collection tank 107 of said second chamber 105, from said total recovery dryer motor 130 and conveys it to a filter 161.

In one embodiment, said plant also comprises a boiler 132, adapted to maintain the water at the operating temperature.

In one embodiment, upstream of said boiler 132 there is said filter 161 where water with a temperature to be restored is filtered and accumulated.

In one embodiment, said hydraulic circuit 131 conveys the water into the treatment tank 113 after having collected it and brought it back to the operating temperature with said boiler 132.

Preferably, said boiler 132 is a solar-powered electric boiler.

In one embodiment, downstream of said boiler 132 there is a tank 110 where it accumulates at the correct temperature for re-introduction into the circulation, after passing through a solenoid valve 163 for pressure reduction and flow regulation.

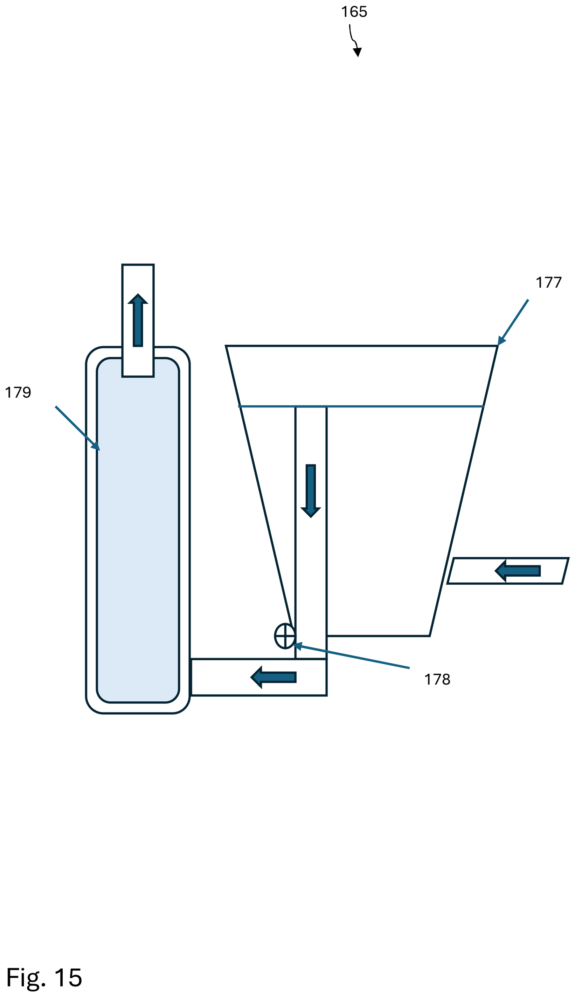

Preferably, before being introduced into said tank 110 and heating by means of said boiler 132, said water is filtered by a filter 165 that blocks the coat that the caryopsis loses during treatments. Said filter, schematically represented in **Figure 15****,** is advantageously composed of a settling tank 177 where the water introduced slows down its flow, thus leading to the precipitation of the largest particles that are resuspended there, such as ears, pebbles, pieces of caryopses. In said tank there is a vertical pipe with surface water suctioning that prevents sediments from being suctioned. Said pipe leads to a bag filter 179 for the filtration of the finest particulate matter that may still be suspended. Said bag filter is connected to a reverse-circuit hydraulic system that can be activated for cleaning the filter itself. A tap 178 allows the filtered coat to be discharged.

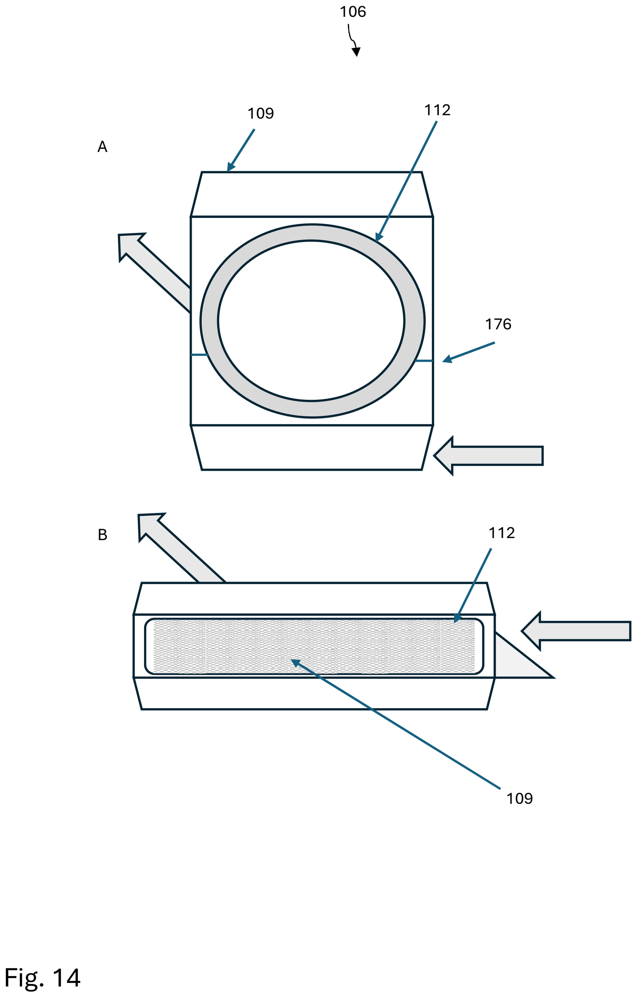

In one embodiment, said dryer is a perforated rotating drum dryer with shaftless auger with helical screws welded directly onto the outer jacket of the cylinder inner side, i.e. core side **(****Figure 14****).**

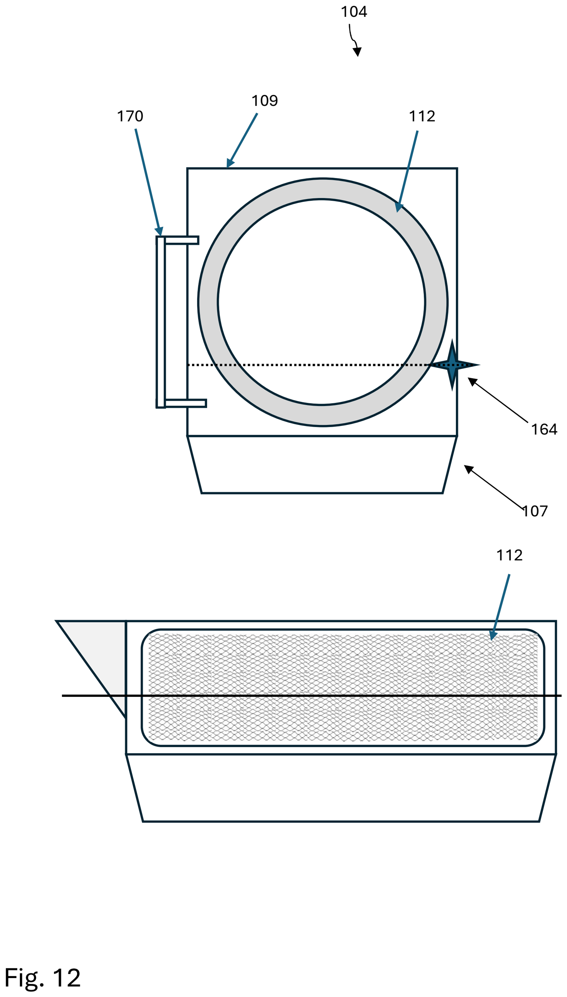

In one embodiment, the detail of which is highlighted in the diagram of **Figure 12****,** said plant also comprises an automated system for regulating the water flow and the water temperature, consequently, the water level. The washing chamber 104 therefore comprises at least one flow regulator upstream of the tap for reintroducing hot water in the tank, an adjustable gooseneck-like drain 164 for regulating the level and discharge of the water. Advantageously, a water recirculation 170 facilitates the detachment of the rice from the basket in said washing chamber 104.

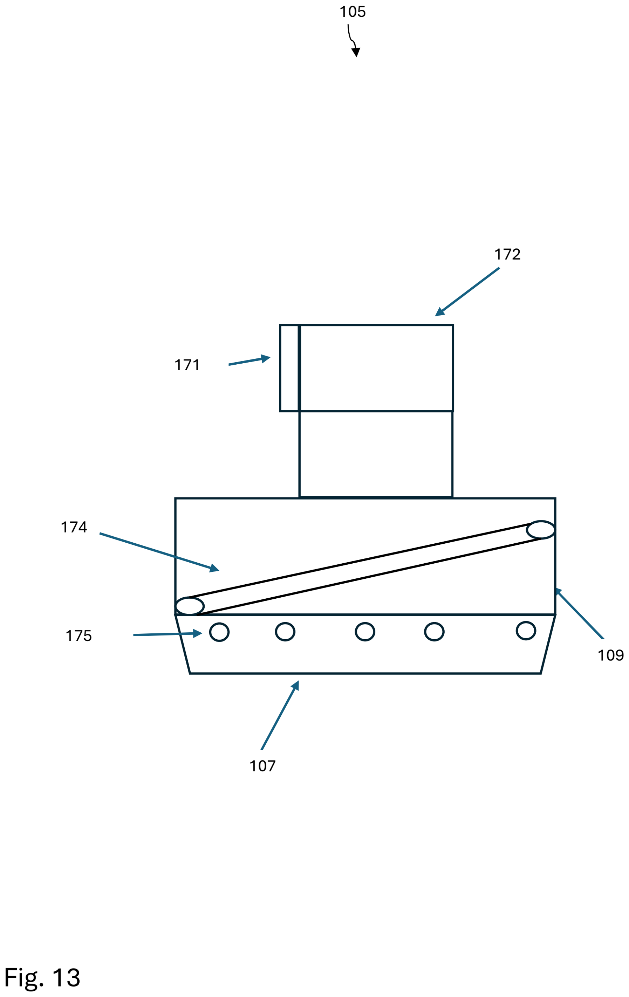

In an embodiment, the detail of which is highlighted in **Figure 13****,** said drainage chamber 105 comprises an anti-microbial filter 171, a centrifugal fan 172, a perforated conveyor belt 174 that moves inside the chamber itself and air outlet chimneys 175.

In one embodiment, the detail of which is highlighted in **Figure 14****,** said third chamber 106 comprises rubber tabs 176 adapted to avoid air flows outside the basket with the rice. The thick arrows in the diagram indicate the air flow in input from the motor and in output.

The water recovered from all phases is accumulated and heated to 55 °C by said boiler. In doing so, the boiler restores the heat absorbed by the seeds (from 2 to 10 °C). Water recovery allows great energy and water savings.

In one embodiment, said method is implemented in the plant described above and comprises:
1) Wet treatment with hot water;
2) Drying of disinfested seeds;
3) Provision of disinfected and dried seeds.

In one embodiment, said seeds are rice.

The rice is immersed in water at a temperature between 54 °C and 56 °C, where the water level is slightly higher than that of the rice, for example it is about 0.5 mm above the level of the rice.

Said rice is kept immersed in said water for a period of between 3 and 5 minutes, after which it is passed into the second chamber which is the drainage chamber. In said drainage chamber, the rice is hit by a flow of air that allows the excess water, collected in the tank below, to be drained and the thermal inertia to be reduced.

After said draining phase, the rice reaches the drying plant, which brings the seed to the required % humidity, between 13-14%. Said drying is operated at temperatures between 35 and 60 °C, preferably at 55° and a relative humidity of 1% with an air speed between 5,000 and 250,000 m³/h, preferably at 40,000 m³/h.

The dried rice exits from the discharge mouth of the dryer.

Advantageously, the water circuit connecting said first and said second chamber, as well as said dryer, allows the water and the heat contained therein to be recovered.

The method according to the present invention allows an efficient recovery of water, water heat and latent heat of evaporation, reaching an energy cost reduction equal to 75% compared to the methods of the prior art and 95% of water.

Said method allows continuous in-line processing.

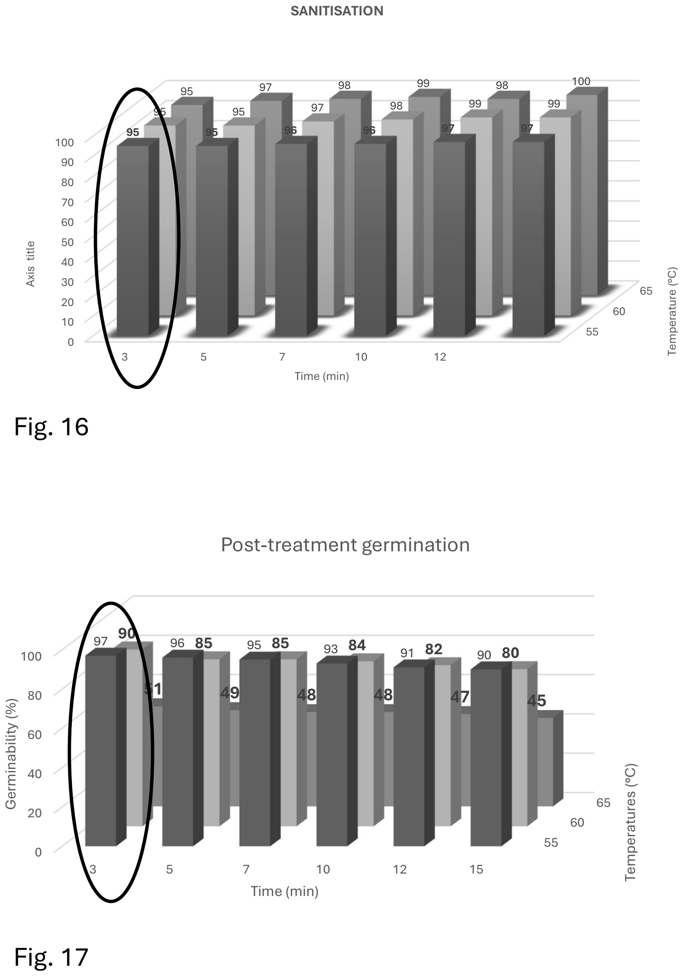

Advantageously, the plant described here allows the treatment efficiency highlighted by the experimental tests whose results are reported in the graphs of **Figure 16** and **Figure 17****.**

Advantageously, the rice treated according to the method of the present invention maintains a germination rate in line with the provisions of European legislation.

The plant and method according to the present invention advantageously use exclusively hot water not under pressure, without the addition of chemical agents potentially impacting the environment and adjacent cultures.

In an absolutely advantageous manner, the plant and method described here do not release emissions into the environment.

The plant and the process implemented in it allow the rice to be sanitized at only 55 °C, in an absolutely short time, such as 3 minutes of exposure to said T. The savings in terms of energy consumption and operating times are absolutely advantageous.

### EXAMPLES

The following examples are merely intended to show some embodiments of the present invention, they are not intended in any way to be limiting thereof. The scope of the invention is defined by the claims.

### Example 1: Treatment efficacy

Using the second embodiment of the plant of the present invention, schematized in **Figure 10****,** different temperatures and times of treatment of the rice with water were tested and the results obtained in terms of efficacy are shown in the graph of **Figure 16****.**

The most effective energy efficient treatment is at 55 °C for 3 minutes, while the least energy efficient treatment is at 65 °C for 15 minutes.

The data also indicate that the maximum variability allowed on the timing is 1 minute. The maximum variability allowed on the temperature is 3 °C. Staying within this variability guarantees sanitisation to be achieved within the limits required by European legislation (samples contained within the grey circle in the graph of **Figure 16****).**

### Example 2: Germination test

The rice treated under the same conditions as tested in Example 1 was evaluated for germination ability. The results are shown in the graph of **Figure 17****.**

Operating at 65 °C for 15 minutes, germination is 60%, that is, 60% of the rice analysed germinates. The samples included within the area highlighted by the grey circle in **Figure 17** show that treatment at 55 °C for 3 minutes is not only the best treatment from the point of view of efficacy and sustainability, but it is the one that damages the seed the least, guaranteeing high germination thereof after sanitisation.

### Example 3: drying analysis

150 kg of rice correctly drained from excess water retains about 50 kg of water per quintal compared to non-soaked rice; it is necessary to apply a drying technology capable of eliminating this amount at the same rate at which the rice enters/exits the washing and draining phase (max 5 minutes). The parameters used for drying were as follows:
- Air flow speed between 5,000 and 25,000 m³/h, preferably about 22,000 m³/h;
- Input air temperature 55 °C
- Relative humidity of the input air of 1%

It has been shown that these parameters allow the result to be obtained in the desired time. The best application for this air is with flow perpendicular to the product on a thin layer. This can be achieved with a rotating perforated basket with shaftless auger and with air conveying blades.

## Claims

1. Plant (1) for the continuous disinfestation of cereal and vegetable seeds from nematodes and/or cryptobiosis nematodes comprising:
- a first chamber (104), which is a closed washing chamber comprising heat-insulating walls (109), a treatment tank (113), a basket with auger (112) without central shaft, a tank (107) for collecting spent hot water;
- a second chamber (105), which is a drainage chamber comprising heat-insulating walls (109), a collection tank (107) and a filtered cold air aeration system (111);
- a third chamber (106) with heat-insulating walls (109), which is a drying chamber comprising a basket with auger (112) without central shaft.

2. The plant (1) according to claim 1, further comprising a total recovery dryer motor (130).

3. The plant (1) according to claim 1, further comprising a filtering system (133), located upstream of said dryer motor (130).

4. The plant according to claim 1, comprising a hydraulic circuit (131) adapted to collect water from said collection tank (107) of said first chamber (104), and from said collection tank (107) of said second chamber (105), from said total recovery dryer motor (130) and to convey it to a boiler (132).

5. The plant according to claim 4 wherein a filter (161) is located upstream of said boiler (132).

6. The plant according to claim 4, wherein said boiler is a solar-powered electric boiler.

7. The plant according to claim 1 also comprising a filter (165) wherein said filter comprises a settling tank (177) in which there is a vertical pipe with surface water suctioning that leads to a bag filter (179).

8. Method for the continuous disinfestation of cereal and vegetable seeds from nematodes and/or cryptobiosis nematodes comprising:
- Providing a plant (1) according to one of claims 1 to 7;
- Wet treatment with hot water in said first chamber (104);
- Draining and Drying;
- Provision of disinfected and dried seeds.

9. The method according to claim 8, wherein said cereal and vegetable seeds are rice seeds.

10. The method according to claim 8, wherein in said first chamber (104) the rice is soaked with water at a temperature between 54 °C and 56 °C, for a time between 3 and 5 minutes.

11. The method according to claim 8, wherein said drying is operated at temperatures between 35 °C and 60 °C, preferably at 55 °C, and relative humidity of 1% with an air speed between 5,000 and 250,000 m³/h, preferably at 40,000 m³/h.
